# EUROPÄISCHE PATENTSCHRIFT

(11) **EP 2 370 795 B1**
(45) Veröffentlichungstag und Bekanntmachung des Hinweises auf die Patenterteilung: **10.04.2019**
(21) Anmeldenummer: 09774894.1
(22) Anmeldetag: 11.12.2009
(51) Int. Cl.: G01F 1/66

(54) **MESSSYSTEM ZUR BESTIMMUNG UND/ODER ÜBERWACHUNG DES DURCHFLUSSES EINES MESSMEDIUMS DURCH DAS MESSROHR MITTELS ULTRASCHALL**
MEASURING SYSTEM FOR DETERMINING AND/OR MONITORING THE FLOW RATE OF A MEASURED MEDIUM THROUGH THE MEASURING TUBE USING ULTRASOUND
SYSTÈME DE MESURE POUR DÉTERMINER ET/OU SURVEILLER PAR ULTRASONS LE DÉBIT D'UN MILIEU DE MESURE DANS LE TUBE DE MESURE

(30) Priorität: 29.12.2008 DE 102008055167
(43) Veröffentlichungstag der Anmeldung: 05.10.2011
(73) Patentinhaber: Endress+Hauser Flowtec AG, 4153 Reinach (CH)
(72) Erfinder: BEZDEK, Michal, CH-4147 Aesch (CH); WIEST, Achim, 79576 Weil am Rhein (DE)
(74) Vertreter: Andres, Angelika Maria
(86) Internationale Anmeldenummer: PCT/EP2009/066914
(87) Internationale Veröffentlichungsnummer: WO 2010/076153

(56) Entgegenhaltungen:
- EP-A1- 0 813 042
- EP-A2- 1 760 436
- DE-A1-102004 052 489
- DE-A1-102008 033 701
- FR-A1- 2 827 321
- US-A- 5 463 906
- US-A1- 2008 196 511

## Beschreibung

Die vorliegende Erfindung betrifft ein Messsystem zur Bestimmung und/oder Überwachung des Durchflusses eines Messmediums durch das Messrohr mittels Ultraschall, mit einem ersten Ultraschallwandler und zumindest einem weiteren zweiten Ultraschallwandler, wobei das Messrohr einen Messrohreinlauf und einen Messrohrauslauf und eine erste Ultraschallwandleraufnahme und zumindest eine weitere, zweite Ultraschallwandleraufnahme aufweist, wobei der erste Ultraschallwandler lösbar mit der ersten Ultraschallwandleraufnahme des Messrohr akustisch koppelbar ist und wobei der zweite Ultraschallwandler lösbar mit der zweiten Ultraschallwandleraufnahme des Messrohr akustisch koppelbar ist.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Strömungsrichtung der Flüssigkeit ausgewertet.

Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen lässt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so dass dieses Prinzip hauptsächlich bei verunreinigten Flüssigkeiten Verwendung findet.

Die Ultraschallwellen werden mit Hilfe so genannter Ultraschallwandler erzeugt bzw. empfangen. Hierfür sind Ultraschallwandler an der Rohrwandung des betreffenden Rohrleitungsabschnitts fest angebracht. Seit neuerem sind auch Clamp-on-Ultraschall-Durchflussmesssysteme erhältlich. Bei diesen Systemen werden die Ultraschallwandler nur noch mit einem Spannverschluss an die Rohrwandung gepresst. Derartige Systeme sind z. B. aus der EP 686 255 B1, US-A 44 84 478 oder US-A 45 98 593 bekannt.

Ein weiteres Ultraschall-Durchflussmessgerät, das nach dem Laufzeitdifferenz-Prinzip arbeitet, ist aus der US-A 50 52 230 bekannt. Die Laufzeit wird hier mittels kurzen Ultraschallimpulsen ermittelt.

Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem piezoelektrischen Element, auch kurz Piezo genannt, und einer Koppelschicht, auch Koppelkeil oder seltener Vorlaufkörper genannt. Die Koppelschicht ist dabei meist aus Kunststoff gefertigt, das piezoelektrische Element besteht in der industriellen Prozessmesstechnik üblicherweise aus einer Piezokeramik. Im piezoelektrischen Element werden die Ultraschallwellen erzeugt und über die Koppelschicht zur Rohrwandung geführt und von dort in die Flüssigkeit geleitet. Da die Schallgeschwindigkeiten in Flüssigkeiten und Kunststoffen unterschiedlich sind, werden die Ultraschallwellen beim Übergang von einem zum anderen Medium gebrochen. Der Brechungswinkel bestimmt sich in erster Näherung nach dem Snell schen Gesetz. Der Brechungswinkel ist somit abhängig von dem Verhältnis der Ausbreitungsgeschwindigkeiten in den Medien.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflektion an Grenzschichten zwischen zwei Materialen.

In der US 5,179,862 wird ein Ultraschallmesssystem offenbart, wobei in eine feste Vorrichtung ein flexibles Messrohr, ein Schlauch, einziehbar ist. Der feste Teil des Messsystems beherbergt die Ultraschallwandler. Verläuft ein Ultraschallsignal axial durch das Messrohr, wird das Messrohr an zwei sich gegenüberliegenden Stellen gebogen. Zwischen den Biegungen befindet sich also die eigentliche Messstrecke des Messrohrs, die Biegungen könnten als Messrohreinlauf und Messrohrauslauf mit gleichem Durchmesser wie das Messrohr aufgefasst werden. Die Koppelelemente der Ultraschallwandler koppeln an den Biegungen die Ultraschallsignale in das Messrohr ein bzw. aus dem Messrohr aus. Dazu weisen die Koppelelemente entsprechende Ein- und/oder Auskoppelflächen auf, welche jeweils einen Winkel zu den piezoelektrischen Elementen aufweisen, welche ihrerseits planparallel zueinander und senkrecht auf der Messrohrachse angeordnet sind. Die schallaussendenden bzw. schallempfangenden Flächen der piezoelektrischen Elemente betragen mindestens die Größe des Durchmessers des Messrohrs. Nachteilig an Winkeln zwischen den schallaussendenden bzw. schallempfangenden Flächen der piezoelektrischen Elemente und den Ein- bzw. Auskoppelflächen der Koppelelemente ist, dass die Schallgeschwindigkeiten in den Koppelelementen und dem Messrohr und/oder im Messmedium aufeinander und mit den Winkeln abgestimmt sein müssen, um einen zur Messrohrsachse parallelen Signalpfad des Ultraschallsignals zu erhalten.

Weitere Beispiele von Ultraschall-Durchflussmesssystemen mit axial an den Enden eines Messrohrs anbringbaren Ultraschallwandlern zeigen die US 5,463,906 und die US 5,717,145. Auch werden piezoelektrische Elemente eingesetzt mit schallaussendenden bzw. schallempfangenden Flächen, welche mindestens der Größe des Durchmessers des Messrohrs entsprechen, um den gesamten Messrohrquerschnitt messtechnisch zu erfassen.

Auch die EP 1 760 436 A2 zeigt ein Ultraschall-Durchflussmesssystem mit einem Messrohr, welches axial mittels Ultraschall durchschallt wird, mit piezoelektrischen Elementen, welche einen Durchmesser der schallaussendenden bzw. schallempfangenden Flächen aufweisen, der mindestens gleich groß dem Durchmesser des Messrohrs ist.

Hingegen ist in der US 2007/0227263 A1 ein Ultraschall-Durchflussmesssystem mit einem Messrohr beschrieben, welches vier Öffnungen aufweist. Zwei Öffnungen sind vorgesehen zum Anschluss an den Prozess. Diese Öffnungen bilden jeweils einen Messrohreinlauf, respektive einen Messrohrauslauf, welche senkrecht auf der Messrohrachse stehen. Sowohl der Messrohreinlauf, als auch der Messrohrauslauf sind auf der gleichen Seite des Messrohrs angebracht. In die beiden anderen Öffnungen des Messrohrs werden die Ultraschallwandler eingefügt. Die Koppelelemente der Ultraschallwandler verschließen das Messrohr axial. Die Ultraschallwandler stehen sich im Wesentlichen planparallel und in einem Winkel von 90° zur Messrohrachse gegenüber. Die Ein- und/oder Auskoppelflächen der Koppelelemente der Ultraschallwandler, zur Ein- bzw. Auskopplung der Ultraschallsignale in das Messmedium, sind konvex. unmittelbar vor den Ein- und/oder Auskoppelflächen, also im Bereich der Ein- bzw. Auskopplung der Ultraschallsignale in das bzw. aus dem Messmedium, weist das Messrohr einen vergrößerten Querschnitt auf. Die Durchmesser der im Wesentlichen scheibenförmigen Ultraschallwandler sind größer als der Durchmesser einer wesentlichen Messstrecke des Messrohrs. Durch die Querschnittsänderung des Messrohrs vor den Ein- und/oder Auskoppelflächen entstehen eben vor den Ein- und/oder Auskoppelflächen Kammern, wo sich das Messmedium sammeln kann. Da die Durchmesser der Messrohrein- bzw. Messrohrausläufe und der Messstrecke des Messrohrs selbst im Wesentlichen gleich sind, wird die Strömung des Messmediums vor den Ein- und/oder Auskoppelflächen verlangsamt und im Messrohr, in einem wesentlichen Teil der Messstrecke, beschleunigt.

Auch die WO 2008/101662 A2 verfügt über einen ähnlichen Aufbau der Messzelle. Zwar sind hier die Durchmesser der Messrohrein- bzw. Messrohrausläufe und des Messrohrs selbst im Wesentlichen gleich und die Messrohrein- bzw. Messrohrausläufe stehen in einem Winkel kleiner 90° auf der Messrohrachse, jedoch wird auch hier die Strömung des Messmediums vor den Ein- und/oder Auskoppelflächen, welche auch hier wiederum durch die in die Messzelle eingesetzten Koppelelemente der Ultraschallwandler geformt werden und in einem Winkel von 90° zur Messrohrachse angeordnet sind, verlangsamt. Hier werden ebenfalls Kammern vor den Ein- und Auskoppelflächen gebildet. Die schallaussendenden bzw. schallempfangenden Flächen der piezoelektrischen Elemente sind größer als der Durchmesser des Messrohrs, allerdings verschließt die Schallein- bzw. Schallauskoppelfläche des Koppelelements axial das Messrohr und ist daher von gleicher Größe. Der Ultraschallwandler ist mittels eines Bajonett-, Schraub-, Clip- oder Schnappverschluss lösbar am Messrohr montierbar.

In der DE 10 2008 002 027 A1, die zum Zeitpunkt der Anmeldung nicht veröffentlicht war, ist ein Messrohr offenbart, welches im Bereich einer Ultraschallwandleraufnahme Zapfen eines Teils eines Bajonettverschlusses aufweist, und ein Ultraschallwandler als passendes Gegenstück bzw. als passender zweiter Teil des Bajonettverschlusses ausgestaltet ist und am Messrohr somit mittels einer Drehung lösbar anbringbar ist.

Der Erfindung liegt die Aufgabe zugrunde, ein hochgenaues Messsystem mit kostengünstig auswechselbaren Messrohren/Messzellen bereit zu stellen.

Die Aufgabe wird gelöst durch ein Messsystem zur Bestimmung und/oder Überwachung des Durchflusses eines Messmediums durch ein Messrohr mit einem ersten Ultraschallwandler und zumindest einem weiteren zweiten Ultraschallwandler, wobei das Messsystem das Messrohr und einen ersten Ultraschallwandler und zumindest einen weiteren zweiten Ultraschallwandler umfasst, wobei das Messrohr einen Messrohreinlauf und einen Messrohrauslauf und eine erste Ultraschallwandleraufnahme und zumindest eine weitere, zweite Ultraschallwandleraufnahme aufweist, wobei der erste Ultraschallwandler lösbar mit der ersten Ultraschallwandleraufnahme des Messrohr akustisch koppelbar ist und wobei der zweite Ultraschallwandler lösbar mit der zweiten Ultraschallwandleraufnahme des Messrohr akustisch koppelbar ist, wobei mindestens ein Ultraschallwandler zumindest einen Bügel aufweist, welcher Bügel umlegbar ist und so ausgestaltet ist, dass der Bügel in mindestens eine am Messrohr angeordnete Erhebung oder Vertiefung einrastbar ist und der Ultraschallwandler am Messrohrlösbar montierbar ist und mit der Ultraschallwandleraufnahme des Messrohrs akustisch koppelbar ist. Mindestens ein Ultraschallwandler weist zumindest einen Bügel auf, welcher Bügel umlegbar ist und so ausgestaltet ist, dass der Bügel in einem umgelegten, und somit geschlossenen, Zustand bei gleichzeitiger Einnahme der Montageposition des Ultraschallwandlers am Messrohr in mindestens eine am Messrohr angeordnete Erhebung oder Vertiefung einrastbar ist, also z.B. in eine Vertiefung oder Erhebung eingreift, einhakt oder sie gar umgreift, und der Ultraschallwandler am Messrohr mit der Einrastung des Bügels lösbar montiert ist und mit der Ultraschallwandleraufnahme des Messrohrs akustisch gekoppelt ist. Die Bestimmung und/oder Überwachung des Durchflusses erfolgt z.B. nach dem Prinzip der Laufzeitdifferenz.

Erhebungen oder Vertiefungen sind insbesondere Zapfen, Schultern, Ringnuten, Wellenschultem etc. Sie sind z.B. Teil einer Welle/Nabe-Verbindung oder einer Feder/NutVerbindung.

Der Ultraschallwandler und die Vertiefungen oder Erhebungen am Messrohr sind Teil eines Befestigungsmechanismus' insbesondere eines Verschlusses. Durch das Umlegen des Bügels ist eine Eigenbewegung des Ultraschallwandlers relativ zum Messrohr, insbesondere rotatorischer Art, nicht nötig. Der Ultraschallwandler wird in die Montageposition gebracht und durch Umlegen des Bügels automatisch in die Messposition gebracht. Dabei ist es insbesondere eine lineare Bewegung, welche dem Ultraschallwandler aufgezwängt wird.

Bei den Verschluss- bzw. Befestigungsmechanismen kommen viele verschiedene Wirkungsweisen in Betracht. An dieser Stelle sollen nur einige Beispiele aufgezählt werden, ohne Anspruch auf Vollständigkeit der Aufzählung. So scheint Schnappverschluss bzw. eine Schnappverbindung ebenso geeignet wie ein Bügel- oder Spannverschluss. Alternativ zu Zapfen ist auch eine Ringnut z.B. als eine Einkerbung am oberen Rand des Messrohrs vorgesehen. In diese greift der Bügelverschluss. Verläuft diese Einkerbung um die Wandleraufnahme auch nur Teilweise herum, so entsteht aus der Einkerbung, welche als Zapfen angesehen werden kann, eine Ringnut. Eine Ausgestaltung sieht einen Verschluss vor, wie er insbesondere bei Reisekoffern üblich ist, ein so genannter Kofferverschluss.

Einer Ausgestaltung des Messsystem zufolge weist das Messrohr mindestens zwei Zapfen auf gegenüberliegenden Seiten des Messrohrs im Bereich mindestens einer Ultraschallwandleraufnahme auf der Messrohraußenseite auf.

Ein Zapfen bezeichnet dabei insbesondere ein hervorstehendes Stück zur Übertragung von Kräften, insbesondere ein abgesetzes Ende einer Achse, das ein Lager aufnehmen kann. Zapfen dienen dazu, Bauteile miteinander zu verbinden. In einem Ausführungsbeispiel liegen die Zapfen in einer Achse. Gemäß einer Ausgestaltung des erfindungsgemäßen Messrohrs liegt diese Achse in der Raumebene, welche durch die Messrohrachse und die Messrohrauslaufachse und/oder die Messrohreinlaufachse aufgespannt wird.

Gemäß einer ersten Weiterbildung der Erfindung besteht der Teil des Befestigungsmechanismus, welcher am Ultraschallwandler angeordnet ist, aus einem Bügel, z.B. einem Zugbügel, und einem Spannbügel, z.B. einem Spannhebel, welche beide über eine erste Verschlussachse miteinander verbunden sind, wobei zumindest der Bügel drehbar auf der ersten Verschlussachse gelagert ist, und einer zweiten Verschlussachse, welche den Spannbügel mit dem Ultraschallwandlergehäuse verbindet, wobei zumindest der Spannbügel drehbar auf der zweiten Verschlussachse gelagert ist. Durch Drehen des Spannbügels um die zweite Verschlussachse wird der Bügel umgelegt. Dabei erfährt er eine translatorische Bewegung senkrecht zur zweiten Verschlussachse.

Gemäß einer Weiterbildung der Erfindung weist zumindest ein Ultraschallwandler zumindest ein erstes Führungselement zur Führung des Ultraschallwandlers auf einer Grundplatte auf und die Grundplatte weist zumindest ein, entsprechend zum ersten Führungselement des Ultraschallwandlers passendes zweites Führungselement zur Führung des Ultraschallwandlers auf der Grundplatte auf, wobei das erste Führungselement und das zweite Führungselement jeweils Teil einer Linearführung sind.

Die Führungsmittel sind also geeignet, den Ultraschallwandler auf der Grundplatte in zwei Himmelsrichtungen im Wesentlichen fest, d.h. unverschiebbar zu lagern und in einer Richtung zumindest über einen bestimmten Bereich verschiebbar zu lagern. Die Ultraschallwandler sind insbesondere gegen eine Rotationsbewegung relativ zur Grundplatte auf der Grundplatte gesichert. So ist z.B. das Messrohr auf der Grundplatte befestigbar und die Sensoren ebenfalls, wobei diese noch in Richtung des Messrohrs und davon weg verschiebbar auf der Grundplatte angeordnet sind.

Die Grundplatte ist jedoch nicht notwendig, um die Ultraschallwandler am Messrohr auszurichten und/oder zu befestigen, sie ist optional, d.h. sie dient lediglich als Abstützung bzw. als Montagebasis für das ganze Messsystem, wobei dann Montagelöcher auf ihrer Unterseite vorgesehen sind, um sie selbst im Prozess zu befestigen. Wenn es in der Anwendung sinnvoll ist, ist es möglich, die Grundplatte zu demontieren und damit das ganze System flexibler und beweglicher zu machen.

Eine weitere Weiterbildung der Erfindung ist darin zu sehen, dass das Messrohr mindestens einen Stecker oder mindestens eine Kupplung zur Herstellung einer Steckverbindung zwischen Messrohr und Grundplatte auf der Messrohraußenseite aufweist und die Grundplatte entsprechend mindestens einen Stecker oder mindestens eine Kupplung zur Herstellung der Steckverbindung zwischen Messrohr und Grundplatte aufweist. Die ist optional, aber auch möglich ist, dass keine direkte bzw. keine kraft- und/oder form- und/Oder stoffschlüssige Verbindung zwischen der Grundplatte und dem Messrohr vorgesehen ist.

Gemäß einer weiteren Weiterbildung sind die Erhebungen oder Vertiefungen im Bereich der Ultraschallwandleraufnahmen am Messrohr angeordnet. Eine Ausgestaltung sieht Zapfen im Bereich der Ultraschallwandleraufnahmen vor.

Gemäß einer Weiterbildung der Erfindung wird vorgeschlagen, dass die Ultraschallwandler jeweils mindestens ein elektromechanisches Wandlerelement oder jeweils mindestens ein elektromechanisches Wandlerelement und jeweils mindestens ein Koppelelement aufweisen, welche Koppelelemente im montierten Zustand der Ultraschallwandler zwischen den elektromechanischen Wandlerelementen der Ultraschallwandler und den Ultraschallwandleraufnahmen des Messrohrs angeordnet sind, welche elektromechanischen Wandlerelemente oder welche Koppelelemente mittels einer festlegbaren Kraft mit den Ultraschallwandleraufnahmen des Messrohrs koppelbar sind. Der Teil des Ultraschallwandlers, welcher bei der Montage mit dem Messrohr akustisch gekoppelt wird, also das elektromechanische Wandlerelement selbst oder ein Koppelelement, welches dann zwischen dem elektromechanischen Wandlerelement und dem Messrohr steht, wird mit festgelegter Vorspannung an das Messrohr bzw. an am Messrohr dazu vorbereitete Ultraschallwandleraufnahmen angedrückt.

Gemäß einer weiteren Weiterbildung der Lösung ist die Kraft mittels einer Feder zwischen einem Ultraschallwandlergehäuse und einer Sensortasse aufbringbar, wobei das elektromechanische Wandlerelement an der Sensortasse angeordnet ist. Die Sensortasse ist ein Bauteil, welches relativ zum Ultraschallwandlergehäuse nur in einer Richtung verschiebbar gelagert ist, insbesondere im Ultraschallwandlergehäuse selbst. Das elektromechanische Wandlerelement ist dann auf einer ersten Seite der Sensortasse angebracht bzw. befestigt. Auf der anderen Seite der Sensortasse befindet sich die Feder. Die Feder liefert somit die Anpresskraft zur akustischen Kopplung des Ultraschallwandlers am Messrohr.

Gemäß einer Ausgestaltung wird mittels Federn im Ultraschallwandler das elektromechanische Wandlerelement oder die schallaussendende- und/oder empfangende Fläche des vorgeschalteten Koppelelements des Ultraschallwandlers an bzw. auf die Wandleraufnahmefläche der jeweiligen Ultraschallwandleraufnahme, insbesondere mit einer vorbestimmten bzw. einstellbaren Kraft gedrückt. Die Kraft ergibt sich aus der Vorspannung der Feder und ist einer Ausgestaltung zufolge bei jeder Montage gleich.

Eine weitere Weiterbildung des erfindungsgemäßen Messsystems schlägt vor, dass die Ultraschallwandleraufnahmen im Bereich des Messrohreinlaufs und/oder im Bereich des Messrohrauslaufs angeordnet sind.

In einer weiteren Weiterbildung des erfindungsgemäßen Messsystems weisen die Ultraschallwandler jeweils mindestens ein elektromechanisches Wandlerelement auf, wobei das Messrohr mit den Ultraschallwandleraufnahmen so ausgestaltet ist, dass sich die elektromechanischen Wandlerelemente im montierten Zustand der Ultraschallwandler am Messrohr im Wesentlichen paarweise planparallel gegenüberstehen.

Gemäß einer weiteren Weiterbildung der Erfindung sind die Ultraschallwandleraufnahmen topfförmig ausgestaltet, mit der jeweiligen Wandleraufnahmefläche der Ultraschallwandleraufnahme als Topfboden, und die Teile der Ultraschallwandler, welche in die topfförmigen Ultraschallwandleraufnahmen einführbar sind, bzw. bei der Montage eingeführt werden, weisen eine unwesentlich kleinere Baugröße auf. Die Ultraschallwandler, insbesondere die Koppelelemente und/oder die elektromechanischen Wandlerelemente passen so in die Ultraschallwandleraufnahmen, dass eine Bewegung der Ultraschallwandler in vier von sechs Freiheitsgraden nur begrenzt bzw. nicht mehr möglich ist. Eine Bewegung in axiale Richtung zur topfförmigen Ultraschallwandleraufnahme und eine Rotation um eben diese Achse wird durch Umlegen des Bügels festgestellt, ohne dass die Lage des Ultraschallwandlers selbst nochmals Wesentlich verändert wird.

Gemäß einer weiteren Weiterbildung der Erfindung ist die Grundplatte so ausgestaltet, dass Kabel der Ultraschallwandler an oder in der Grundplatte verdeckt und/oder vor äußeren Einflüssen geschützt führbar sind.

Einer Weiterbildung des erfindungsgemäßen Messsystems sind die elektromechanischen Wandlerelemente der Ultraschallwandler wesentlich kleiner sind als der Innendurchmesser des Messrohrs.

Eine weitere Weiterbildung der Erfindung zeigt, dass die Ultraschallwandler jeweils mindestens zwei elektromechanische Wandlerelemente aufweisen. Der erste und der zweite Ultraschallwandler weisen jeweils zwei elektromechanische Wandlerelemente auf, welche sich paarweise gegenüberstehen, wodurch zwei Messpfade entstehen. Die Ultraschallwandler und damit beide Ihrer elektromechanischen Wandlerelemente sind gleichzeitig mit dem Befestigungsmechanismus an das Messrohr ankoppelbar.

Die Erfindung wird anhand der nachfolgenden Figuren näher erläutert, in denen jeweils ein Ausführungsbeispiel dargestellt ist. Gleiche Elemente sind in den Figuren mit gleichen Bezugszeichen versehen.
- Fig. 1: zeigt schematisch ein erfindungsgemäßes Messsystem mit einem erfindungsgemäßen Messrohr,
- Fig. 2: zeigt ein weiteres erfindungsgemäßes Messsystem mit einem erfindungsgemäßen Messrohr,
- Fig. 3: zeigt ein weiteres erfindungsgemäßes Messsystem mit einem erfindungsgemäßen Messrohr,
- Fig. 4: zeigt verschiedene Koppelelemente im Querschnitt,
- Fig. 5: zeigt ein erfindungsgemäßes Messsystem mit zwei Ultraschallwandlern, einem Messrohr und einer Grundplatte in einer Draufsicht,
- Fig. 6: zeigt ein 3 dimensionales Abbild eines erfindungsgemäßen Messrohrs,
- Fig. 7: zeigt einen detaillierten Querschnitt durch ein erfindungsgemäßes Messsystem
- Fig. 8: zeigt einen erfindungsgemäßen Bügelverschluss in 3D,
- Fig. 9: zeigt eine Kabelführung in einer erfindungsgemäßen Grundplatte,
- Fig. 10: zeigt ein weiteres erfindungsgemäßes Messrohr.

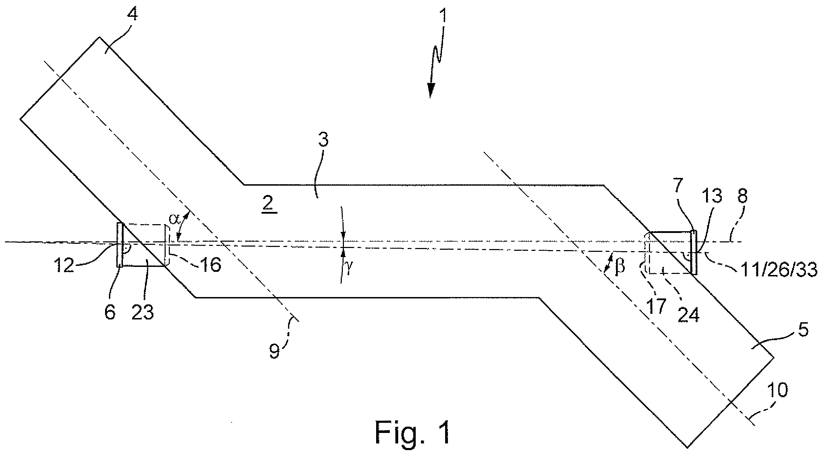

In Fig. 1 ist ein erfindungsgemäßes Messrohr 3 eines erfindungsgemäßen Messsystems 1 schematisch im Schnitt dargestellt. Das Messrohr 3 weist jeweils einen ersten Messrohreinlauf 4 und einen ersten Messrohrauslauf 5 auf. Der Messrohreinlauf 4 weist einen über seine Länge näherungsweise konstanten Querschnitt auf. Dieser ist in dieser Ausgestaltung näherungsweise gleich dem Querschnitt des Messrohrs 3, sowohl in Form als auch in Größe. Der Messrohrauslauf 5 hingegen ist leicht kegelförmig, so dass der Querschnitt des Messrohrauslaufs 5, welcher an das Messrohr grenzt, etwas größer ist, als der Querschnitt des Messrohrauslaufs 5, welcher als Prozessanschluss nutzbar ist. Sowohl die Messrohrachse 8, als auch die Messrohreinlaufachse 9 und die Messrohrauslaufachse 10 liegen in einer Raumebene, hier die Zeichenebene, wobei der Messrohreinlauf 4 und der Messrohrauslauf 5 auf sich gegenüberliegenden Seiten des Messrohrs 3 angeordnet sind.

Scheibenförmige elektromechanische Wandlerelemente 6 und 7, zur Wandlung elektrischer Signale in Ultraschallsignale und/oder umgekehrt, sind an Ultraschallwandleraufnahmen 23 und 24 akustisch gekoppelt. Die Ultraschallwandleraufnahmen 23 und 24 weisen im Wesentlichen zylindrische Form auf. Sie übernehmen die Funktion der Kopplung der Ultraschallsignale in das Messmedium 2. Dazu werden die Ultraschallsignale von den elektromechanischen Wandlerelementen 6, 7 erzeugt und an den Wandleraufnahmeflächen in die Ultraschallwandleraufnahmen 23 und 24 eingekoppelt, welche ihrerseits die Ultraschallsignale bis zum Messmedium 2 leiten und über ihre Schallein- bzw. Schallauskoppelflächen 16 und 17 die Ultraschallsignale in das Messmedium 2 einkoppeln. Werden die Ultraschallsignale vom Messmedium 2 zurück zu den elektromechanischen Wandlerelementen geführt, so werden sie an den Schallein- bzw. Schallauskoppelflächen 16 und 17 aus dem Messmedium 2 ausgekoppelt und bis zu den elektromechanischen Wandlerelementen 6, 7 von den Ultraschallwandleraufnahmen 23 und 24 geleitet. Die Schallein- bzw. Schallauskoppelflächen 16 und 17 sind hier kleiner als die Flächen der elektromechanischen Wandlerelementen 6, 7. Die Ultraschallwandleraufnahmen 23 und 24 besitzen zumindest im Bereich der Schallein- bzw. Schallauskoppelflächen 16 und 17 die Form eines Exponentialhorns. Die Ultraschallsignale breiten sich entlang eines so genannten Signal- oder Messpfads aus. Modellhaft wird hier ein geradenförmiger Messpfad beschreiben. Die Wellenfronten des Ultraschallsignals stehen im Wesentlichen senkrecht auf dem Messpfad.

Sowohl die Schallein- bzw. Schallauskoppelflächen 16 und 17, als auch die elektromechanischen Wandlerelementen 6, 7 und die Wandleraufnahmeflächen der Ultraschallwandleraufnahmen 23 und 24 besitzen einen im Wesentlichen kreisrunden Querschnitt. Die Mittelpunkte 27, 28 der Schallein- bzw. Schallauskoppelflächen 16 und 17 und die Mittelpunkte der elektromechanischen Wandlerelementen 6, 7 und die der Wandleraufnahmeflächen der Ultraschallwandleraufnahmen 23 und 24 liegen auf einer einzigen geraden.

Da elektromechanische Wandlerelemente 6, 7 näherungsweise planparallel zu den Schallein- bzw. Schallauskoppelflächen 16, 17 sind und sich die Schallein- bzw. Schallauskoppelflächen 16, 17 im Wesentlichen planparallel gegenüberstehen und sich die Querschnitte der Ultraschallwandleraufnahmen 23 und 24 von den Wandleraufnahmeflächen zu den Schallein- bzw. Schallauskoppelflächen 16, 17 achsensymmetrisch ändern, gilt der Messpfad als zusammenfallend mit der Verbindungslinie 11 zwischen den Mittelpunkten 12 und 13 der elektromechanischen Wandlerelementen 6, 7 und damit sind der Winkel γ zwischen der Verbindungslinie 11 zwischen den Mittelpunkten 12 und 13 des ersten und zweiten elektromechanischen Wandlerelements 6, 7 und zwischen der Messrohrachse 8 und der Winkel η zwischen der Verbindungslinie zwischen den Mittelpunkten der Schallein- und/oder Schallauskoppelflächen 16, 17 und der Messrohrachse 8 und der Winkel θ zwischen der Verbindungslinie zwischen den Mittelpunkten der Wandleraufnahmeflächen und der Messrohrachse 8 gleich und gleich dem Winkel ζ des Messpfads.

Der Messpfad oder auch Signalpfad, welcher hier gleich der Verbindungslinie 11 zwischen den Mittelpunkten 12 und 13 der elektromechanischen Wandlerelementen 6, 7 ist, ist leicht zur Messrohrachse 8 geneigt. Der Winkel ζ bzw. γ beträgt hier ca. 5°. Jedoch verläuft der Messpfad 11 vollständig auf der Seite der Messrohrachse 8, auf welcher sich der Messrohrauslauf 5 befindet. Eine erste gedachte Raumebene wird, wie bereits beschreiben, von der Messrohrachse 8 und den Messrohreinlauf- und Messrohrauslaufachsen 9 und 10 aufgespannt. Eine zweite gedachte Ebene ist dann senkrecht zur ersten gedachten Ebene und schneidet die erste gedachte Ebene in einer ersten Schnittgeraden. Diese erste Schnittgerade ist in dieser Ausgestaltung die Messrohrachse 8 selbst. Dann schneidet die Verbindungslinie zwischen den Mittelpunkten der Schallein- und/oder Schailauskoppelflächen 16, 17 bzw. hier der Messpfad die zweite gedachte Ebene nicht. Der Messpfad 11 befindet sich auf der Seite der zweiten gedachten Ebene, auf welcher auch der Messrohrauslauf 5 am Messrohr 3 angeordnet ist.

Durch die bereits aufgezeigten Bedingungen sind die Flächen der elektromechanischen Wandlerelements 6, 7, der Wandleraufnahmeflächen und insbesondere der Schallein- und/oder Schallauskoppelflächen 16, 17 kleiner als der freie Querschnitt des Messrohrs 3, welcher hier dem Innendurchmesser des Messrohrs 3 ableitbar ist.

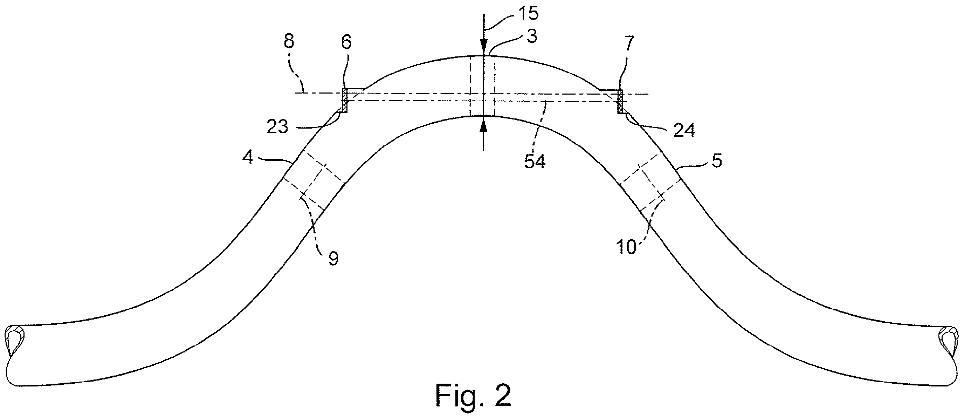

Fig. 2 offenbart ein erfindungsgemäßes Messsystem 1 mit einem weiteren erfindungsgemäßen Messrohr 3. Das Messrohr 3 hat in diesem Ausführungsbeispiel einen näherungsweise kreisrunden Querschnitt und eine, relativ zu seinem Durchmesser, kurze Längsausdehnung. Auch der Messrohreinlauf 4 und der Messrohrauslauf 5 haben näherungsweise gleiche und kreisrunde Querschnitte. Auch diese sind, relativ zu ihren Querschnitten gesehen, kurz. In diesem Ausführungsbeispiel grenzen der Messrohreinlauf 4 und der Messrohrauslauf 5 nicht direkt an das Messrohr 3. Sie sind mit diesem jedoch jeweils über ein Zwischenrohr 73, 74 verbunden. Die Zwischenrohre 73, 74 sind gekrümmt und bzw. gebogen. Eine Definition von geradenförmigen Achsen in den Zwischenrohren 73, 74 ist daher nicht einfach möglich. Sowohl das Messrohr 3, als auch der Messrohreinlauf 4 und der Messrohrauslauf 5, weisen hier eine bestimmte Länge mit einer geraden Mittelachse 8, 9, 10 auf, auf welcher alle Mittelpunkte des jeweiligen Rohrs 3, 4, 5 liegen.

Die Messrohrauslaufachse 10 und Messrohrachse 8 spannen eine erste gedachte Ebene auf, also sowohl die Messrohrauslaufachse 10 als auch die Messrohrachse 8 liegen in der ersten gedachten Ebene, hier der Zeichenebene. Senkrecht zu dieser ersten gedachten Ebene verläuft eine zweite gedachte Ebene, wobei die Messrohrachse 8 in dieser zweiten gedachten Ebene liegt, die Messrohrachse 8 ist also Teil der ersten Schnittgeraden zwischen erster und zweiter gedachter Ebene. Die Verbindungslinie zwischen den Mittelpunkten der sich hier planparallel gegenüberstehenden ersten und zweiten elektromechanischen Wandlerelementen 6 und 7, welche hier gleich dem einbeschriebenen Messpfad gleicht, verläuft nun auf der Seite des Messrohrauslaufs und schneidet die zweite Ebene nicht. Der Messpfad liegt vielmehr in einer gedachten Drittelebene, welche parallel zur zweiten gedachten Ebene den Innendurchmesser 15 des Messrohrs 3 drittelt. Entlang des Mess- oder auch Signalpfads erfolgt die Ausbreitung der von den elektromechanischen Wandlerelementen 6 und 7 erzeugten Ultraschallwellen, deren gemessene Laufzeitdifferenz in und entgegen der Strömung des Messmediums im Messrohr 3 in die Berechnung des Durchflusses mit einfließt.

Dadurch dass der Messpfad 54 in einem Bereich des Messrohrs 3 angeordnet ist, wo durch die besondere Form des Messrohrs 3 ein durch Kalibrierung bekanntes Strömungsprofil vorliegt, so befindet sich der Messpfad 54 z.B. in einer im Vergleich zu der im Bereich der Messrohrachse vorherrschenden Strömung beschleunigten Strömung, ist die Qualität der Messung bzw. Bestimmung des Durchflusses, insbesondere für viskose Messmedien oder insgesamt sehr langsame Strömungen und/oder Durchflüsse, erhöht.

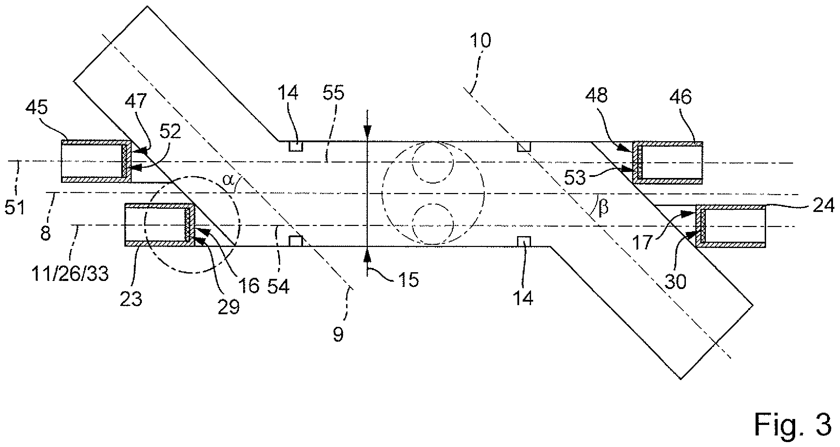

Fig. 3 zeigt ein weiteres erfindungsgemäßes Messrohr 3 eines erfindungsgemäßen Messsystems 1 schematisch im Schnitt dargestellt. Es weist im Wesentlichen gleiche Querschnitte des Messrohrein- 4 und Auslaufs 5 und des Messrohrs 3 auf. Sowohl der Messrohreinlauf 4, als auch der Messrohrauslauf 5 weisen einen Winkel von ca. 45° zur Messrohrachse auf, also gilt α ≈ β ≈ 45°. Weiterhin weist das Messrohr 3 vier Ultraschallwandleraufnahmen 23, 24, 45, 46 auf. Die Ultraschallwandleraufnahmen 23, 24, 45, 46 sind jeweils topfförmig ausgestaltet. In die topfförmigen Ultraschallwandleraufnahmen 23, 24, 45, 46 können elektromechanische Wandlerelemente 6, 7, 19, 20 eingebracht werden. Die Ultraschallwandleraufnahmen 23, 24, 45, 46 dienen dann als Koppelelemente zwischen den elektromechanischen Wandlerelementen 6, 7, 19, 20 und dem Messmedium 2 im Messrohr 3. Die elektromechanischen Wandlerelemente 6, 7, 19, 20 werden mit den Wandleraufnahmeflächen 29, 30, 52, 53 der Ultraschallwandleraufnahme 23, 24, 45, 46 akustisch gekoppelt. In diesem Ausführungsbeispiel stellen die Wandleraufnahmeflächen 29, 30, 52, 53 gleichermaßen die Topfinnenböden der topfförmigen Ultraschallwandleraufnahmen 23, 24, 45, 46 dar.

Die Verbindungslinie 26 zwischen den Mittelpunkten 27 und 28 der ersten und zweiten Schallein- und/oder Schallauskoppelfläche 16, 17, welche hier der Verbindungslinie 11 zwischen des ersten und zweiten elektromechanischen Wandlerelements 6, 7 entspricht, weist also erfindungsgemäß einen Winkel γ zur Messrohrachse 8 auf. Hier ist dieser Winkel γ 0° bzw. 180°, d.h. die Verbindungslinie 26 und Messrohrachse 8 sind parallel zueinander. Ebenso verhält es sich mit der Verbindungslinie 51 zwischen den Mittelpunkten 49 und 50 der dritten und vierten Schallein- und/oder Schallauskoppelfläche 47, 48.

Die vier Ultraschallwandleraufnahmen 23, 24, 45, 46 liegen sich paarweise gegenüber, wobei die erste und die dritte Ultraschallwandleraufnahme 23,45 im Bereich des Messrohreinlaufs 4 liegen und die zweite und die vierte Ultraschallwandleraufnahme 24, 46 im Bereich des Messrohrauslaufs 5 angeordnet sind. Dadurch ergeben sich zwei Messpfade 54, 55, wobei sich der erste Messpfad 54 zwischen dem ersten und zweiten elektromechanischen Wandlerelements 6 und 7 befindet, welche hier in der ersten und zweiten Ultraschallwandleraufnahme 23, 24 angeordnet sind, und wobei sich der zweite Messpfad 55 zwischen den in der dritten und vierten Ultraschallwandleraufnahme 45, 46 angeordneten dritten und vierten elektromechanischen Wandlerelementen 19 und 20 befindet. Dabei sind beide Messpfade parallel zur Messrohrachse 8, d.h. sie stehen in einem Winkel ζ, respektive ξ, von näherungsweise 0° bzw. 180° zur Messrohrachse 8, und beide Messpfade 54, 55 fallen jeweils mit den jeweiligen Verbindungslinien 11, 51, 26, 33 zwischen den Mittelpunkten der bereits bekannten Flächen der Schalleinkoppel- und/oder Schallauskoppelfläche 16, 17, 47, 48 bzw. der Wandleraufnahmeflächen 29, 30, 52, 53 zusammen. Die sich paarweise gegenüberstehenden Wandlerelemente 6 und 7, sowie 19 und 20 sind somit im Wesentlichen planparallel zueinander. Es versteht sich von selbst, dass sowohl die elektromechanischen Wandlerelementen 6, 7, 19, 20 als auch die Schalleinkoppel- und/oder Schallauskoppelflächen 16, 17, 47, 48 wesentlich kleiner sind, als der Messrohrdurchmesser 15.

Wie die Abbildung veranschaulicht, teilt die Messrohrachse 8 den Querschnitt des Innendurchmessers 15 des Messohrs 3 in zwei gleichgroße Teile. Wie ebenfalls unschwer zu erkennen, wird dieser geteilte Innendurchmesser 15 wiederum von dem ersten Messpfad 54 geteilt. Die sich gegenüberstehenden Schalleinkoppel- und/oder Schallauskoppelflächen 16 und 17 befinden sich vollständig und deutlich auf der Seite der Messrohrachse 8, auf welcher auch der Messrohrauslauf 5 liegt. Daher liegt der erste Messpfad 54 auch deutlich jenseits einer Linie, welche den Innendurchmesser 15 des Messrohrs 3 drittelt. Hier liegt der erste Messpfad 15 sogar auf der Seite einer so genannten Viertelebene, also einer Ebene parallel zu einer zweiten gedachten Raumebene, welche Viertelebene den Innendurchmesser 15 des Messrohrs 3 viertelt, auf welcher Seite der gedachten Viertelebene auch der Messrohrauslauf 5 angeordnet ist, wobei die zweite gedachte Raumebene senkrecht zu einer ersten Raumebene steht, mit der Messrohrachse 8 als Schnittgeraden zwischen erster und zweiter Raumebene, welche erste Raumebene von der Messrohrachse 8 und dem Messrohrauslauf 5 aufgespannt wird.

Zusätzlich weist das Messrohr 3 auf seiner Innenseite zwei Ringe 14 auf, welchen den freien Querschnitt des Messrohrs 3 verkleinern. Dadurch wird die Strömung des Messmediums im Messrohr 3 konditioniert und die Messgenauigkeit erhöht. Die Ringe ragen 1/10 des Innendurchmessers des Messrohrs in das Messrohr hinein. Jeder Ring hat einen Abstand von dem zu ihm nächstliegenden Messrohrein- 4 und/oder -auslauf 5 von 0 bis 1/2 der Messrohrlänge zueinander. Durch die Ringe wird die eine Linearisierung der Messcharakteristik erreicht, die aber gleichzeitig eine Veränderung des Algorithmus zur Reynoldszahlenbestimmung erfordert.

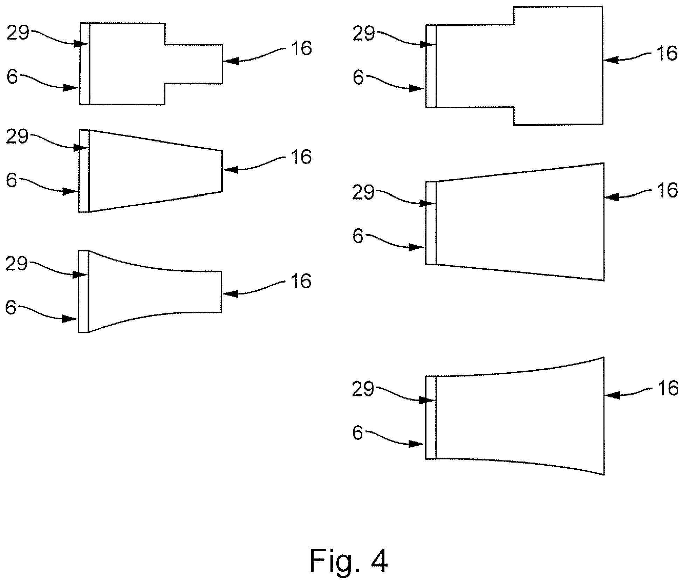

In Fig. 4 sind verschiedene Koppelelemente im Querschnitt gezeichnet. Durch eine Verkleinerung der Querschnittsfläche von der Wandleraufnahmefläche 29 zur Schallein- und/oder Schallauskoppeifläche 16 wird die Signalenergie des elektromechanischen Wandlerelements 6 gebündelt. Dies ist vorteilhaft für die Abstrahlung von Ultraschallsignalen. Umgekehrt wirkt die Vergrößerung der Querschnittsfläche von der Wandleraufnahmefläche 29 zur Schallein- und/oder Schallauskoppelfläche 16 als Trichter für eintreffende Ultraschallsignale. Ihre Signalenergie wird wiederum vor dem Auftreffen auf das elektromechanische Wandlerelement 6 gebündelt. Prinzipiell wird die Richtcharakteristik und die Sensitivität/Abstrahlleistung durch die verschiedenen Koppelelemente auf deren jeweiligen Anwendungsfall optimiert.

Die Koppelelemente nehmen dabei verschiedene Formen an. Dargestellt ist lediglich eine Auswahl ohne Anspruch auf Vollständigkeit. Neben der Abstufung des Koppelelements sind auch Koppelelemente in Form eines Kegelstumpfs oder eines Exponentialhorns dargestellt. Es ist ebenfalls ein System aus akustischen Linsen vorstellbar.

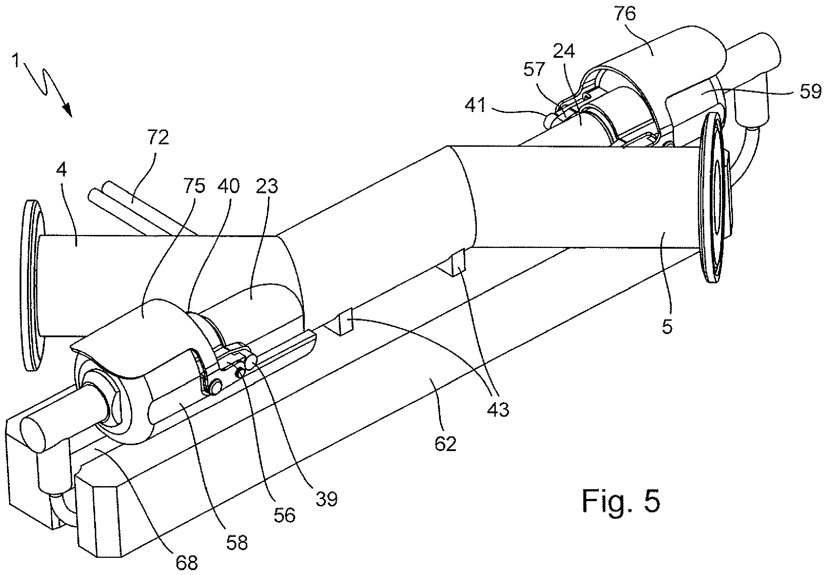

Fig. 5 skizziert dreidimensional ein erfindungsgemäßes Messsystem 1. Das Messsystem umfasst eine Grundplatte 62, mit einer nicht dargestellten Kupplung zur Befestigung des Messrohrs 3. Das Messrohr 3 wiederum weist einen zur Kupplung der Grundplatte 62 passenden Stecker 43 auf. Durch Einstecken des Steckers 43 in die Kupplung 44 ist das Messrohr 3 lösbar mit der Grundplatte 62 verbunden und gegen verdrehen und verschieben gesichert. Lediglich durch Ausstecken lässt sich das Messrohrs 3 relativ zur Grundplatte 62 bewegen. Das Messrohr 3 weist erfindungsgemäß einen Messrohreinlauf 4 und einen Messrohrauslauf 5 auf, welche hier in einer Raumebene liegen. Alternativ zur Steckverbindung zwischen Messrohr und Grundplatte ist auch lediglich ein Abstützen des Messrohrs durch die Grundplatte denkbar.

Weiterhin umfasst das Messsystem 1 einen ersten Ultraschallwandler 58 und einen zweiten Ultraschallwandler 59. Der zweite Ultraschallwandler 59 ist in diesem Ausführungsbeispiel, ähnlich wie das Messrohr 3, auf die Grundplatte 62 gesteckt und mit dieser lösbar verbunden. Somit ist auch der zweite Ultraschallwandler 59 nur durch Ausstecken relativ zur Grundplatte 62 zu bewegen. Der erste Ultraschallwandler 58 hingegen, ist koaxial zur Messrohrachse verschiebbar auf der Grundplatte 62 gelagert. Er weist ein erstes, hier nicht verkörpertes, Führungselement auf, welches zusammen mit einem zweiten Führungselement 68 der Grundplatte 62 die Verschiebbarkeit des ersten Ultraschallwandlers 58 gewährleistet. Hier ist das zweite Führungselement 68 eine T-Nut. Eine am ersten Ultraschallwandler 58 befestigte und entsprechend ausgestaltete Schiene ermöglicht die formschlüssige Verbindung von erstem Ultraschallwandler 58 und Grundplatte 62 mit gleichzeitigem Freiheitsgrad des ersten Ultraschallwandlers 58 koaxial zur Messrohrachse. Der erste Ultraschallwandler 58 wird zur Montage an das Messrohr 3 heran geschoben und durch Umlegen des ersten Bügels 56 an das Messrohr 3 akustisch gekoppelt.

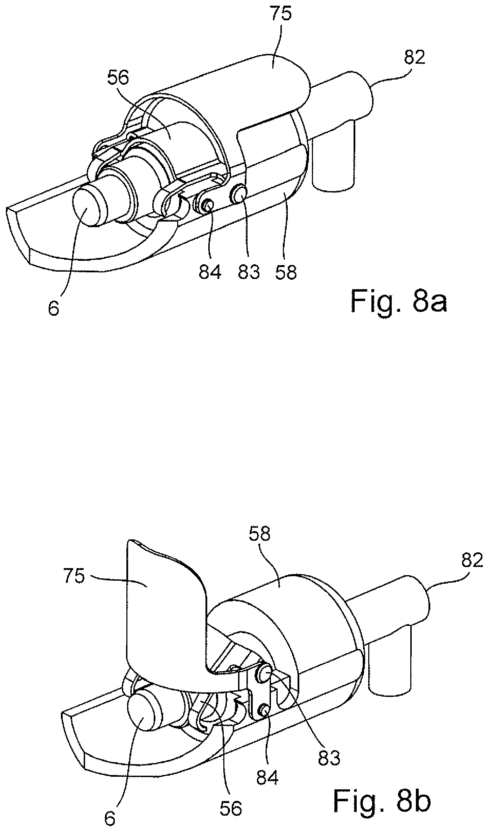

Sowohl der erste Ultraschallwandler 58 weist einen ersten Bügel 56 auf, als auch der zweite Ultraschallwandler 59 weist einen zweiten Bügel 57 auf. Die Bügel 56, 57 sind so ausgestaltet, dass sie in die am Messrohr 3 bzw. an den Ultraschallwandleraufnahmen 23, 24 angeordneten Zapfen 39, 40, 41 im umgelegten Zustand einhaken und somit die Ultraschallwandler 58 und 59 am Messrohr 3 lösbar befestigen. Eine mögliche Ausgestaltung der Mechanik der Befestigung wird in den Fig. 8a und 8b präsentiert. Durch Umlegen der Spannbügels 75 und 76 werden die Bügel 56, 57 umgelegt und die Ultraschallwandler 58 und 59 montiert bzw. wieder vom Messrohr gelöst. Fig. 5 zeigt die Ultraschallwandler 58 und 59 im montierten Zustand und damit die Bügel 56 und 57 in umgelegtem bzw. geschlossenem Zustand. Die Spannbügel 75 und 76 dienen hier gleichzeitig als Sicherungsbügel bzw. Verriegelungshebel.

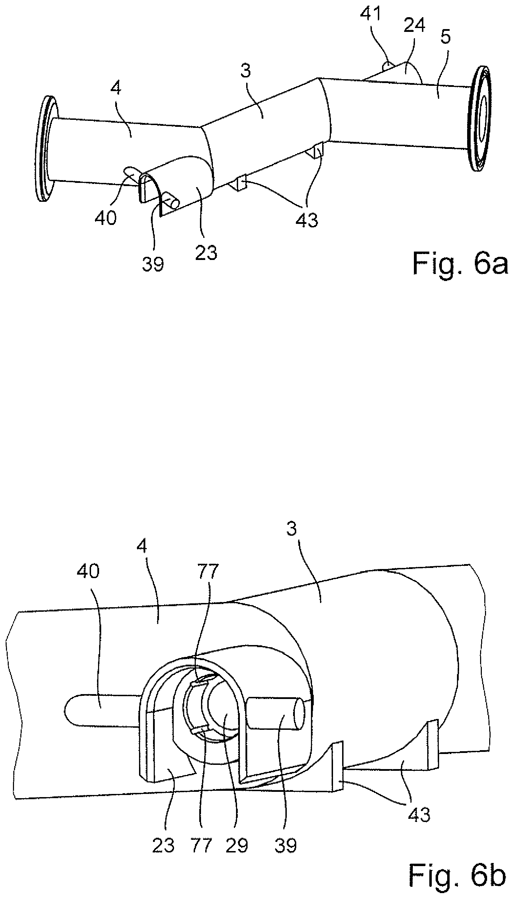

Die Fig. 6a und 6b beschreiben das Messrohr 3 mit einem Messrohreinlauf 4 und einem Messrohrauslauf 5, wie es in Fig. 5 noch auf der Grundplatte montiert dargestellt ist. Zu sehen sind die Ultraschallwandleraufnahmen 23 und 24, welche aus der Mitte des Messrohrs 3 heraus versetzt sind. Dadurch entsteht ein Messpfad, welcher auf der Seite der Messrohrachse verläuft, auf welcher sich der Messrohrauslauf 5 befindet. Weiterhin sind Standfüße 43 zum Andocken des Messrohrs 3 auf einer Grundplatte am Messrohr 3 vorgesehen und die Zapfen 39, 40, 41 zum Koppeln von Ultraschallwandlern. Auf den Füßen 43 wird das Messrohr 3 auf der Grundplatte lediglich abgestützt. Die Grundplatte in diesem Falle würde keine Kupplung aufweisen. Das Messrohr 3 ist hier nicht mit der Grundplatte verbindbar und nur über die Ultraschallwandler in seiner Position gehalten. Das Abstützen des Messrohrs auf der Grundplatte kann jedoch bei der Installation bzw. Montage sehr nützlich sein. Die erste Ultraschallwandleraufnahme 23 ist topfförmig ausgestaltet. Eine erste Wandleraufnahmefläche 29 bildet den Topfboden der Ultraschallwandleraufnahme 23. An diese erste Wandleraufnahmefläche 29 ist das erste elektromechanische Wandlerelement 6 direkt oder indirekt über ein erstes Koppelelement des ersten Ultraschallwandlers akustisch koppelbar. Zur Führung des ersten Ultraschallwandlers weist die erste Ultraschallwandleraufnahme 23 Führungsschienen 77 auf. Diese dienen hier der zur Messrohrachse koaxialen Ausrichtung und Führung des ersten Ultraschallwandlers.

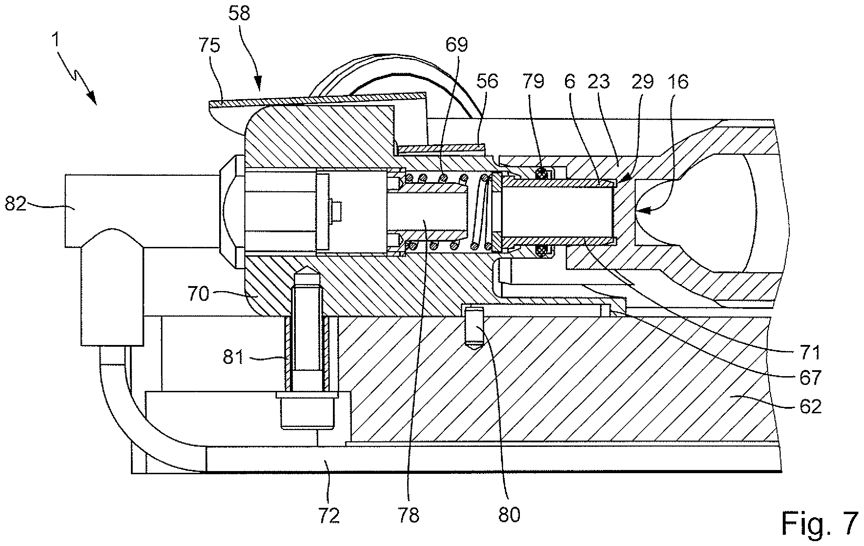

Fig. 7 zeigt einen Querschnitt durch ein erfindungsgemäßes Messsystem 1 mit einem erfindungsgemäßen Messrohr einem ersten Ultraschallwandler 58 und einer Grundplatte 62. Der erste Ultraschallwandler 58 weist ein erstes elektromechanisches Wandlerelement 6 auf, mittels welchem empfangene Ultraschallsignale in elektrische Signale umgewandelt werden oder welches elektrische Signale in Ultraschallsignale wandelt. Das erste elektromechanische Wandlerelement 6 ist an der Spitze einer so genannten Sensortasse 71 angeordnet. Die Sensortasse 71 wird in der ersten Ultraschallwandleraufnahme 23 geführt. Das erste elektromechanische Wandlerelement 6 steht in näherungsweise akustischer Spaltlosem Kontakt mit der ersten Wandleraufnahmefläche 29 der ersten Ultraschallwandleraufnahme 23. Die Mittelpunkte der ersten Wandleraufnahmefläche 29 der ersten Ultraschallwandleraufnahme 23 und des ersten elektromechanischen Wandlerelements 6 liegen auf einer Achse, welche Achse gleich der Verbindungslinie zwischen den Mittelpunkten der ersten Schallein- und/oder Schallauskoppelfläche 16 der ersten Ultraschallwandleraufnahme 23 und der zweiten Schallein- und/oder Schallauskoppelfläche der zweiten Ultraschallwandleraufnahme und damit gleich dem ersten Messpfad ist. Die erste Ultraschallwandleraufnahme 23 ist topfförmig dargestellt mit der ersten Wandleraufnahmefläche 29 als Topfboden.

Angepresst wird das erste elektromechanische Wandlerelement 6 bzw. die Sensortasse 71 über eine Spiralfeder 69. Die Federkraft der Spiralfeder 69 ist wiederum unter anderem abhängig von der Position des ersten Ultraschallwandlers 58 relativ zur ersten Wandleraufnahmefläche 29. Diese ist im montierten Zustand, also wenn die Bügel 56 umgelegt sind, durch Umlegen des ersten Spannbügels, hier ein Spannhebel 75, und in die Zapfen am Messrohr eingegriffen haben, nur von Fertigungstoleranzen der einzelnen Bauteile beeinflusst. Einstellen lässt sich diese Federkraft mittels einer Einstellschraube 78. Die Einstellschraube 78 ist mit dem Gehäuse 70 des ersten Ultraschallwandlers 58 verbunden und die Spiralfeder 69 liegt einerseits an der Einstellschraube 78 an und andererseits an der Sensortasse 71. Durch die Einstellschraube 78 ist eine vorgegebene Kraft auf das erste elektromechanische Wandlerelement 6 bzw. auf die erste Wandleraufnahmefläche 29 einstellbar.

In der Achse parallel zum Messpfad wird der erste Ultraschallwandler 58 von dem Befestigungsmechanismus mit den Bügeln und den Zapfen festgestellt. Die anderen Freiheitsgrade werden mittels einem ersten und einem zweiten Führungselement, welche am ersten Ultraschallwandler 58 und der Grundplatte 62 angeordnet sind eingeschränkt. Eine Relativbewegung des ersten Ultraschallwandlers 58 zur Grundplatte 62 ist im montierten Zustand nur in dem Maße der Eindrückung der Feder 69 möglich. Alternativ dazu ist ein Anschlag am Ultraschallwandler vorzusehen, welcher bei umgeklapptem Spannhebel 75 ein weiteres Eindrücken der Feder 69 verhindert. Die Aufgaben und Funktionen des ersten und zweiten Führungselements, also der so genannten Linearführung des Ultraschallwandlers 58 auf der Grundplatte 62, sind in dieser Ausgestaltung verteilt auf einen Zylinderstift 80, welcher fest in der Grundplatte 62 verankert ist, und einer Führungsbahn 67 im Ultraschallwandler. Zusätzlich ist eine Schraube in einer Distanzhülse 81 in eingeschränktem Maße zu einer Relativbewegung koaxial zum Messpfad fähig. Die Distanzhülse 81 ermöglicht kleine Bewegungen der Ultraschallwandler 58 in beiden Richtungen in der Ebene parallel zur Grundplatte. Das Ziel ist, dass die Ultraschallwandler 58 ausschließlich durch die Ultraschallwandleraufnahmen 23 am Messrohr 3 ausgerichtet werden und nicht durch die Führungsbahn 67 als erstes Führungselement an der Grundplatte.

In den Fig. 8a und 8b ist eine Mechanik zur Befestigung der Ultraschallwandler am Messrohr illustriert. Der erste Ultraschallwandler 58 ist in Fig. 8a mit geschlossener Befestigungsmechanik, d.h. mit umgelegtem Bügel, und in Fig. 8b mit offenem Bügel zu sehen. Es sind das erste elektromechanische Wandlerelement 6 des Ultraschallwandlers 58 zu sehen, welches an die nicht gezeigte Wandleraufnahmefläche des Messrohrs im montierten Zustand angedrückt wird. Über den am anderen Ende des Ultraschallwandlers 58 angeordneten Winkelstecker 82 werden die Kabel unter die Grundplatte geführt.

Eine erste Achse 83 verbindet den ersten Bügel 56 und den ersten Spannbügel 75 in dargestellter Art und Weise. Über die zweite Achse 84 ist lediglich der Spannbügel 75 am Ultraschallwandler 58 befestigt. Dadurch ergibt sich beim Umlegen des Spannbügels 75 eine rotatorische und translatorische Bewegung des ersten Bügels 56. Dieser ist wiederum so ausgestaltet, dass er in die Zapfen des Messrohrs einhaken kann und somit den Ultraschallwandler am Messrohr feststellt.

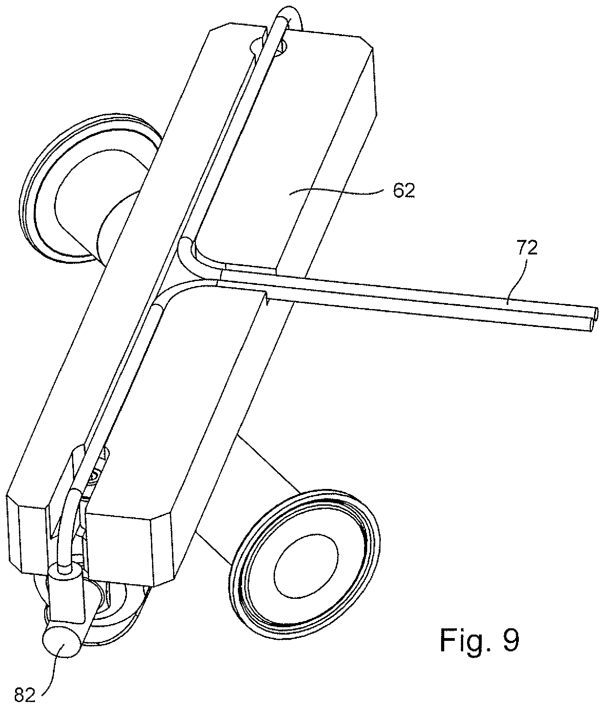

In Fig. 9 ist die vorher bereits beschriebene Grundplatte 62 in einer Draufsicht gezeichnet. Zu sehen ist ein Kabelkanal auf der Unterseite der Grundplatte 62, also auf der dem Messrohr abgewandten Seite der Grundplatte, in welchem die Kabel 72 der Ultraschallwandler in der Grundplatte 62 verdeckt und vor äußeren Einflüssen geschützt geführt werden. Die Kabel 72 werden über einen Winkelstecker 82 von den Ultraschallwandlern auf die Unterseite der Grundplatte 62 geführt.

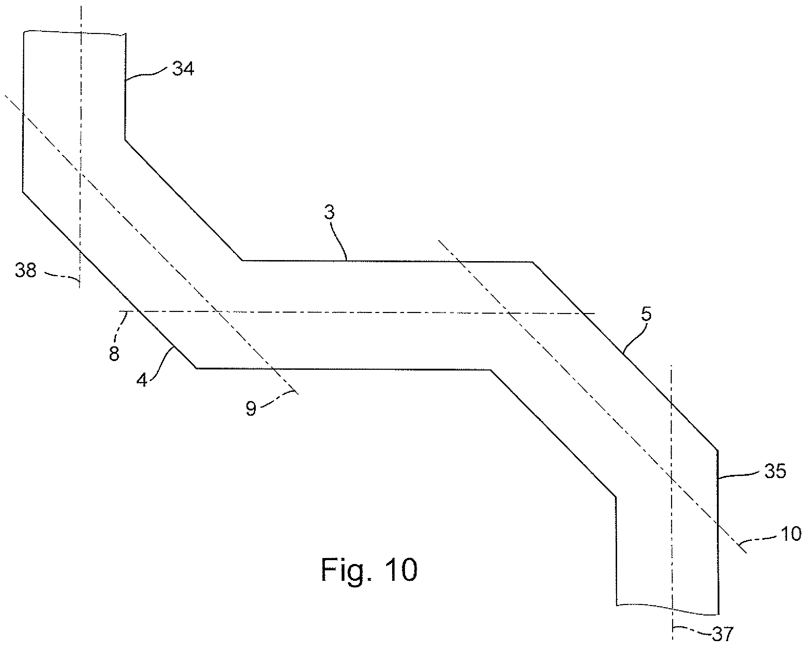

Fig. 10 repräsentiert eine Ausgestaltung eines weiteren erfindungsgemäßen Messrohrs 3. Das Messrohr 3 weist einen ersten Messrohreinlauf 4 und einen ersten Messrohrauslauf 5 auf, welche in einem Winkel von näherungsweise 45° zum Messrohr 3 am Messrohr 3 angeordnet sind, d.h. die erste Messrohreinlaufachse 9 und die erste Messrohrauslaufachse 10 weisen jeweils einen Winkel von ca. 45° zur Messrohrachse 8 auf. Erster Messrohreinlauf 4 und erster Messrohrauslauf 5 liegen dabei auf gegenüberliegenden Seiten des Messrohrs 3, d.h. die erste Messrohreinlaufachse 9 und die erste Messrohrauslaufachse 10 sind parallel zueinander und liegen im Wesentlichen in einer Raumebene.

Nun weist das Messrohr 3 eine zusätzliche Einlaufstrecke bzw. einen zusätzlichen, zweiten Messrohreinlauf 34 und eine zusätzliche Auslaufstrecke bzw. einen zusätzlichen, zweiten Messrohrauslauf 35 auf, welche ihrerseits jeweils eine Mittelachse 36, 37 aufweisen. Der zweite Messrohreinlauf 34 grenzt dabei an den ersten Messrohreinlauf 4 und der zweite Messrohrauslauf 35 grenzt an den ersten Messrohrauslauf 5. Die zweite Messrohreinlaufachse 36 weist in diesem Ausführungsbeispiel einen Winkel von im Wesentlichen 90° zur Messrohrachse auf und die zweite Messrohrauslaufachse 37 weist hier ebenfalls einen Winkel von im Wesentlichen 90° zur Messrohrachse auf. Auch die zweite Messrohreinlaufachse 36 und die zweite Messrohrauslaufachse 37 liegen in der gleichen Raumebene, wie die erste Messrohreinlaufachse 9 und die erste Messrohrauslaufachse 10 und die Messrohrachse 8. Dadurch wird die Strömung des Messmediums im Messrohr 3 in vorgegebener Art und Weise konditioniert.

### Bezugszeichenliste

- 1: Messsystem
- 2: Messmedium
- 3: Messrohr
- 4: Erster Messrohreinlauf
- 5: Erster Messrohrauslauf
- 6: Erstes elektromechanisches Wandlerelement
- 7: Zweites elektromechanisches Wandlerelement
- 8: Messrohrachse
- 9: Erste Messrohreinlaufachse
- 10: Erste Messrohrauslaufachse
- 11: Verbindungslinie zwischen den Mittelpunkten der Wandlerelemente
- 12: Mittelpunkt des ersten elektromechanischen Wandlerelements
- 13: Mittelpunkt des zweiten elektromechanischen Wandlerelements
- 14: Ringe
- 15: Innendurchmesser des Messrohrs
- 16: Erste Schallein- und/oder Schallauskoppelfläche
- 17: Zweite Schallein- und/oder Schallauskoppelfläche
- 18: Abstand zwischen den Schallein- und/oder Schallauskoppelflächen
- 19: Drittes elektromechanisches Wandlerelement
- 20: Viertes elektromechanisches Wandlerelement
- 21: Mittelpunkt des dritten elektromechanischen Wandlerelements
- 22: Mittelpunkt des vierten elektromechanischen Wandlerelements
- 23: Erste Ultraschallwandleraufnahme
- 24: Zweite Ultraschallwandleraufnahme
- 25: Regel-/Auswerteeinheit
- 26: Verbindungslinie zwischen den Mittelpunkten der ersten und zweiten Schallein- und/oder Schallauskoppelflächen
- 27: Mittelpunkt der ersten Schallein- und/oder Schallauskoppelfläche
- 28: Mittelpunkt der zweiten Schallein- und/oder Schallauskoppelfläche
- 29: Erste Wandleraufnahmefläche
- 30: Zweite Wandleraufnahmefläche
- 31: Mittelpunkt der ersten Wandleraufnahmefläche
- 32: Mittelpunkt der zweiten Wandleraufnahmefläche
- 33: Verbindungslinie zwischen den Mittelpunkten der Wandleraufnahmeflächen
- 34: Zweiter Messrohreinlauf
- 35: Zweiter Messrohrauslauf
- 36: Zweite Messrohreinlaufachse
- 37: Zweite Messrohrauslaufachse
- 38: Messrohraußenseite
- 39: Erster Zapfen
- 40: Zweiter Zapfen
- 41: Dritter Zapfen
- 42: Vierter Zapfen
- 43: Stecker
- 44: Kupplung
- 45: Dritte Ultraschallwandleraufnahme
- 46: Vierte Ultraschallwandleraufnahme
- 47: Dritte Schallein- und/oder Schallauskoppelfläche
- 48: Vierte Schallein- und/oder Schallauskoppelfläche
- 49: Mittelpunkt der dritten Schallein- und/oder Schallauskoppelfläche
- 50: Mittelpunkt der vierten Schallein- und/oder Schallauskoppelfläche
- 51: Verbindungslinie zwischen den Mittelpunkten der dritten und vierten Schallein- und/oder Schallauskoppelflächen
- 52: Dritte Wandleraufnahmefläche
- 53: Vierte Wandleraufnahmefläche
- 54: Erster Messpfad
- 55: Zweiter Messpfad
- 56: Erster Bügel
- 57: Zweiter Bügel
- 58: Erster Ultraschallwandler
- 59: Zweiter Ultraschallwandler
- 60: Dritter Ultraschallwandler
- 61: Vierter Ultraschallwandler
- 62: Grundplatte
- 63: Erstes Koppelelement
- 64: zweites Koppelelement
- 65: Drittes Koppelelement
- 66: Viertes Koppelelement
- 67: Erstes Führungselement
- 68: Zweites Führungselement
- 69: Feder
- 70: Ultraschallwandlergehäuse
- 71: Sensortasse
- 72: Kabel
- 73: Erstes Zwischenrohr
- 74: Zweites Zwischenrohr
- 75: Erster Spannbügel
- 76: Zweiter Spannbügel
- 77: Führungsschienen
- 78: Einstellschraube
- 79: O-Ring-Dichtung
- 80: Zylinderstift
- 81: Distanzhülse
- 82: Winkelstecker
- 83: Erste Verschlussachse
- 84: Zweite Verschlussachse

## Patentansprüche

1. Messsystem (1) zur Bestimmung und/oder Überwachung des Durchflusses eines Messmediums (2) durch ein Messrohr (3), wobei das Messsystem das Messrohr und einen ersten Ultraschallwandler (6) und zumindest einen weiteren zweiten Ultraschallwandler (7) umfasst, wobei das Messrohr (3) einen Messrohreinlauf (4) und einen Messrohrauslauf (5) und eine erste Ultraschallwandleraufnahme (29) und zumindest eine weitere, zweite Ultraschallwandleraufnahme (30) aufweist, wobei der erste Ultraschallwandler (6) lösbar mit der ersten Ultraschallwandleraufnahme (29) des Messrohrs (3) akustisch koppelbar ist und wobei der zweite Ultraschallwandler (7) lösbar mit der zweiten Ultraschallwandleraufnahme (30) des Messrohrs (3) akustisch koppelbar ist,
**dadurch gekennzeichnet,**
**dass** mindestens ein Ultraschallwandler (58, 59, 60, 61) zumindest einen Bügel (56, 57) aufweist, welcher Bügel (56, 57) umlegbar ist und so ausgestaltet ist, dass der Bügel (56, 57) in mindestens eine am Messrohr (3) angeordnete Erhebung oder Vertiefung (39, 40, 41, 42) einrastbar ist und dass der Ultraschallwandler (58, 59, 60, 61) am Messrohr (3) lösbar montierbar ist und mit der Ultraschallwandleraufnahme (29, 30) des Messrohrs (3) akustisch koppelbar ist.

2. Messsystem (1) nach Anspruch 1,
**dadurch gekennzeichnet,**
**dass** zumindest ein Ultraschallwandler (58, 59, 60, 61) zumindest ein erstes Führungselement (67) zur Führung des Ultraschallwandlers (58, 59, 60, 61) auf einer Grundplatte (62) aufweist und dass die Grundplatte (62) zumindest ein, entsprechend zum ersten Führungselement (67) des Ultraschallwandlers (58, 59, 60, 61) ausgestaltetes/passendes zweites Führungselement (68) zur Führung des Ultraschallwandlers (58, 59, 60, 61) auf der Grundplatte (62) aufweist, wobei das erste Führungselement (67) und das zweite Führungselement (68) jeweils Teil einer Linearführung sind.

3. Messsystem (1) nach Anspruch 2,
**dadurch gekennzeichnet,**
**dass** das Messrohr (3) mindestens einen Stecker (43) oder mindestens eine Kupplung zur Herstellung einer Steckverbindung zwischen Messrohr (3) und Grundplatte (62) auf der Messrohraußenseite (38) aufweist und die Grundplatte (62) entsprechend mindestens einen Stecker oder mindestens eine Kupplung (44) zur Herstellung der Steckverbindung zwischen Messrohr (3) und Grundplatte (62) aufweist.

4. Messsystem (1) nach einem der Ansprüche 1 bis 3,
**dadurch gekennzeichnet,**
**dass** die Erhebungen oder Vertiefungen (39, 40, 41, 42) im Bereich der Ultraschallwandleraufnahmen (29, 30) am Messrohr (3) angeordnet sind.

5. Messsystem (1) nach einem der Ansprüche 1 bis 4,
**dadurch gekennzeichnet,**
**dass** die Ultraschallwandler (58, 59, 60, 61) jeweils mindestens ein elektromechanisches Wandlerelement (6, 7, 19, 20) oder jeweils mindestens ein elektromechanisches Wandlerelement (6, 7, 19, 20) und jeweils mindestens ein Koppelelement (63, 64, 65, 66) aufweisen, welche Koppelelemente (63, 64, 65, 66) im montierten Zustand der Ultraschallwandler (58, 59, 60, 61) zwischen den elektromechanischen Wandlerelementen (6, 7, 19, 20) der Ultraschallwandler (58, 59, 60, 61) und den Ultraschallwandleraufnahmen (29, 30, 45, 46) des Messrohrs (3) angeordnet sind, welche elektromechanischen Wandlerelemente (6, 7, 19, 20) oder welche Koppelelemente (63, 64, 65, 66) mittels einer festlegbaren Kraft mit den Ultraschallwandleraufnahmen (29, 30, 45, 46) des Messrohrs (3) koppelbar sind.

6. Messsystem (1) nach Anspruch 5,
**dadurch gekennzeichnet,**
**dass** die Kraft mittels einer Feder (69) zwischen einem Ultraschallwandlergehäuse (70) und einer Sensortasse (71) aufbringbar ist, wobei das elektromechanische Wandlerelement (6, 7, 19, 20) an der Sensortasse (71) angeordnet ist.

7. Messsystem (1) nach einem der Ansprüche 1 bis 6,
**dadurch gekennzeichnet,**
**dass** die Ultraschallwandleraufnahmen (29, 30, 45, 46) im Bereich des Messrohreinlaufs (4) und/oder im Bereich des Messrohrauslaufs (5) angeordnet sind.

8. Messsystem (1) nach einem der Ansprüche 1 bis 7,
**dadurch gekennzeichnet,**
**dass** die Ultraschallwandleraufnahmen (23, 24, 45, 46) topfförmig ausgestaltet sind, mit der jeweiligen Wandleraufnahmefläche (29, 30, 52, 53) der Ultraschallwandleraufnahme (23, 24, 45, 46) als Topfboden, und die Teile der Ultraschallwandler (58, 59, 60, 61), welche in die topfförmigen Ultraschallwandleraufnahmen (23, 24, 45, 46) einführbar sind eine unwesentlich kleinere Baugröße aufweisen.

9. Messsystem (1) nach einem der Ansprüche 1 bis 8,
**dadurch gekennzeichnet,**
**dass** die Ultraschallwandler (58, 59, 60, 61) jeweils mindestens ein elektromechanisches Wandlerelement (6, 7, 19, 20) aufweisen, wobei das Messrohr (3) mit den Ultraschallwandleraufnahmen (29, 30, 45, 46) so ausgestaltet ist, dass sich die elektromechanischen Wandlerelemente (6, 7, 19, 20) im montierten Zustand der Ultraschallwandler (58, 59, 60, 61) am Messrohr (3) im Wesentlichen paarweise planparallel gegenüberstehen.

10. Messsystem (1) nach einem der Ansprüche 1 bis 9,
**dadurch gekennzeichnet,**
**dass** die Ultraschallwandler (58, 59, 60, 61) jeweils mindestens zwei elektromechanische Wandlerelemente (6, 7, 19, 20) aufweisen.

11. Messsystem (1) nach einem der Ansprüche 1 bis 10,
**dadurch gekennzeichnet,**
**dass** die Grundplatte (62) so ausgestaltet ist, dass Kabel (72) der Ultraschallwandler (58, 59, 60, 61) an oder in der Grundplatte (62) verdeckt/vor äußeren Einflüssen geschützt führbar sind.

## Claims

1. Measuring system (1) designed to determine and/or monitor the flow of a medium (2) through a measuring tube (3), wherein the measuring system comprises the measuring tube and a first ultrasonic transducer (6) and at least a second ultrasonic transducer (7), wherein the measuring tube (3) has a measuring tube inlet (4) and a measuring tube outlet (5) and a first ultrasonic transducer support (29) and at least an additional, second ultrasonic transducer support (30), wherein the first ultrasonic transducer (6) can be acoustically coupled in a detachable manner to the first ultrasonic transducer support (29) of the measuring tube (3) and wherein the second ultrasonic transducer (7) can be acoustically coupled in a detachable manner to the second ultrasonic transducer support (30) of the measuring tube (3),
**characterized in that**
at least one ultrasonic transducer (58, 59, 60, 61) features at least one bracket (56, 57), wherein said bracket (56, 57) can be moved and is designed in such a way that the bracket (56, 57) can be engaged in at least one elevation or recess (39, 40, 41, 42) arranged on the measuring tube (3), and
**in that** the ultrasonic transducer (58, 59, 60, 61) can be mounted on the measuring tube (3) in a detachable manner and can be coupled acoustically with the ultrasonic transducer support (29, 30) of the measuring tube (3).

2. Measuring system (1) as claimed in Claim 1,
**characterized in that**
at least one ultrasonic transducer (58, 59, 60, 61) features at least a first guide element (67) designed to guide the ultrasonic transducer (58, 59, 60, 61) on a base plate (62), and **in that** the base plate (62) features at least a second guide element (68) - designed in a similar way as/adapted to the first guide element (67) of the ultrasonic transducer (58, 59, 60, 61) - designed to guide the ultrasonic transducer (58, 59, 60, 61) on the base plate (62), wherein the first guide element (67) and the second guide element (68) are each part of a linear guide.

3. Measuring system (1) as claimed in Claim 2,
**characterized in that**
the measuring tube (3) features at least one connector (43) or at least one coupling to establish a plug-in connection between the measuring tube (3) and the base plate (62) on the outside of the measuring tube (38), and the base plate (62) accordingly features at least one connector or at least one coupling (44) to establish the plug-in connection between the measuring tube (3) and the base plate (62).

4. Measuring system (1) as claimed in one of the Claims 1 to 3,
**characterized in that**
the elevations or recesses (39, 40, 41, 42) are arranged in the area of the ultrasonic transducer supports (29, 30) on the measuring tube (3).

5. Measuring system (1) as claimed in one of the Claims 1 to 4,
**characterized in that**
the ultrasonic transducers (58, 59, 60, 61) each feature at least one electromechanical transducer element (6, 7, 19, 20) or at least one electromechanical transducer element (6, 7, 19, 20) and at least one coupling element (63, 64, 65, 66), wherein, when the ultrasonic transducers (58, 59, 60, 61) are mounted, said coupling elements (63, 64, 65, 66) are arranged between the electromechanical transducer elements (6, 7, 19, 20) of the ultrasonic transducers (58, 59, 60, 61) and the ultrasonic transducer supports (29, 30, 45, 46) of the measuring tube (3), wherein said electromechanical transducer elements (6, 7, 19, 20) or said coupling elements (63, 64, 65, 66) can be coupled with the ultrasonic transducer supports (29, 30, 45, 46) of the measuring tube (3) with a definable force.

6. Measuring system (1) as claimed in Claim 5,
**characterized in that**
the force can be applied with a spring (69) between an ultrasonic transducer housing (70) and a sensor cup (71), wherein the electromechanical transducer element (6, 7, 19, 20) is arranged on the sensor cup (71).

7. Measuring system (1) as claimed in one of the Claims 1 to 6,
**characterized in that**
the ultrasonic transducer supports (29, 30, 45, 46) are arranged in the zone of the measuring tube inlet (4) and/or in the zone of the measuring tube outlet (5).

8. Measuring system (1) as claimed in one of the Claims 1 to 7,
**characterized in that**
the ultrasonic transducer supports (23, 24, 45, 46) are designed in the form of a pot, with the respective transducer support surface (29, 30, 52, 53) of the ultrasonic transducer support (23, 24 45, 46) acting as the base of the pot, and wherein the parts of the ultrasonic transducers (58, 59, 60, 61), which can be inserted into the pot-shaped ultrasonic transducer supports (23, 24, 45, 46), are slightly smaller in size.

9. Measuring system (1) as claimed in one of the Claims 1 to 8,
**characterized in that**
the ultrasonic transducers (58, 59, 60, 61) each feature at least one electromechanical transducer element (6, 7, 19, 20), wherein the measuring tube (3) with the ultrasonic transducer supports (29, 30, 45, 46) is designed in such a way that, when the ultrasonic transducers (58, 59, 60, 61) are mounted on the measuring tube (3), the electromechanical transducer elements (6, 7, 19, 20) are opposite one another in a plane-parallel manner, essentially in pairs.

10. Measuring system (1) as claimed in one of the Claims 1 to 9,
**characterized in that**
the ultrasonic transducers (58, 59, 60, 61) each feature at least two electromechanical transducer elements (6, 7, 19, 20).

11. Measuring system (1) as claimed in one of the Claims 1 to 10,
**characterized in that**
the base plate (62) is designed in such a way that cables (72) of the ultrasonic transducers (58, 59, 60, 61) can be guided on or in the base plate (62) in a manner in which they are covered/protected from external influences.

## Revendications

1. Système de mesure (1) destiné à la détermination et/ou la surveillance du débit d'un produit mesuré (2) à travers un tube de mesure (3), le système de mesure comprenant le tube de mesure et un premier convertisseur à ultrasons (6) et au moins un deuxième convertisseur à ultrasons (7), le tube de mesure (3) présentant un entrée de tube de mesure (4) et une sortie de tube de mesure (5) et un premier support de convertisseur à ultrasons (29) et au moins un autre, deuxième support de convertisseur à ultrasons (30), le premier convertisseur à ultrasons (6) pouvant être couplé de façon acoustique, de façon amovible, avec le premier support de convertisseur à ultrasons (29) du tube de mesure (3) et le deuxième convertisseur à ultrasons (7) pouvant être couplé de façon acoustique, de façon amovible, avec le deuxième support de convertisseur à ultrasons (30) du tube de mesure (3),
**caractérisé**
**en ce qu'**au moins un convertisseur à ultrasons (58, 59, 60, 61) comporte au moins un étrier (56, 57), lequel étrier (56, 57) peut être replié et est conçu de telle sorte que l'étrier (56, 57) peut être engagé dans au moins une saillie ou un creux (39, 40, 41, 42) disposé sur le tube de mesure (3), et
**en ce que** le convertisseur à ultrasons (58, 59, 60, 61) peut être monté de façon amovible sur le tube de mesure (3) et peut être couplé de façon acoustique avec le support de convertisseur à ultrasons (29, 30) du tube de mesure (3).

2. Système de mesure selon la revendication 1,
**caractérisé**
**en ce qu'**au moins un convertisseur à ultrasons (58, 59, 60, 61) comporte au minimum un premier élément de guidage (67) destiné au guidage du convertisseur à ultrasons (58, 59, 60, 61) sur une plaque de base (62), et **en ce que** la plaque de base (62) comporte au minimum un deuxième élément de guidage (68) - conçu de façon analogue / adapté au premier élément de guidage (67) - destiné au guidage du convertisseur à ultrasons (58, 59, 60, 61) sur la plaque de base (62), le premier élément de guidage (67) et le deuxième élément de guidage (68) faisant chacun partie d'un guidage linéaire.

3. Système de mesure selon la revendication 2,
**caractérisé**
**en ce que** le tube de mesure (3) comporte au moins un connecteur mâle (43) ou au moins un connecteur femelle pour la constitution d'une connexion enfichable entre le tube de mesure (3) et la plaque de base (62) sur le côté extérieur de tube de mesure (38), et la plaque de base (62) comporte de façon analogue au moins un connecteur mâle ou au moins un connecteur femelle (44) pour la constitution d'une connexion enfichable entre le tube de mesure (3) et la plaque de base (62).

4. Système de mesure selon l'une des revendications 1 à 3,
**caractérisé**
**en ce que** les saillies ou les creux (39, 40, 41, 42) sont disposés dans la zone des supports de convertisseur à ultrasons (29, 30) sur le tube de mesure (3).

5. Système de mesure selon l'une des revendications 1 à 4,
**caractérisé**
**en ce que** les convertisseurs à ultrasons (58, 59, 60, 61) comportent chacun au moins un élément convertisseur électromécanique (6, 7, 19, 20) ou chacun au moins un élément convertisseur électromécanique (6, 7, 19, 20) et chacun au moins un élément de couplage (63, 64, 65, 66), lesquels éléments de couplage (63, 64, 65, 66) sont disposés à l'état monté des convertisseurs à ultrasons (58, 59, 60, 61) entre les éléments convertisseurs électromécaniques (6, 7, 19, 20) des convertisseurs à ultrasons (58, 59, 60, 61) et les supports de convertisseur à ultrasons (29, 30, 45, 46) du tube de mesure (3), lesquels éléments convertisseurs électromécaniques (6, 7, 19, 20) ou lesquels éléments de couplage (63, 64, 65, 66) peuvent être couplés au moyen d'une force définissable avec les supports de convertisseur à ultrasons (29, 30, 45, 46) du tube de mesure (3).

6. Système de mesure selon la revendication 5,
**caractérisé**
**en ce que** la force peut être appliquée au moyen d'un ressort (69) entre un boîtier de convertisseur à ultrasons (70) et une cuvette de capteur (71), l'élément convertisseur électromécanique (6, 7, 19, 20) étant disposé sur la cuvette de capteur (71).

7. Système de mesure selon l'une des revendications 1 à 6,
**caractérisé**
**en ce que** les supports de convertisseur à ultrasons (29, 30 45, 46) sont disposés dans la zone de l'entrée de tube de mesure (4) et/ou dans la zone de la sortie de tube de mesure (5).

8. Système de mesure selon l'une des revendications 1 à 7,
**caractérisé**
**en ce que** les supports de convertisseur à ultrasons (23, 24 45, 46) sont conçus en forme de pot, avec la surface de support de convertisseur (29, 30, 52, 53) respective du support de convertisseur à ultrasons (23, 24 45, 46) comme fond de pot, et les composants des convertisseurs à ultrasons (58, 59, 60, 61), lesquels peuvent être introduits dans les supports de convertisseur à ultrasons (23, 24, 45, 46) en forme de pot, présentent une taille légèrement plus petite.

9. Système de mesure selon l'une des revendications 1 à 8,
**caractérisé**
**en ce que** les convertisseurs à ultrasons (58, 59, 60, 61) comportent chacun au moins un élément convertisseur électromécanique (6, 7, 19, 20), le tube de mesure (3) avec les supports de convertisseur à ultrasons (29, 30, 45, 46) étant conçu de telle sorte que les éléments convertisseurs (6, 7, 19, 20) se font face dans des plans parallèles, pour l'essentiel par paires, à l'état monté des convertisseurs à ultrasons (58, 59, 60, 61).

10. Système de mesure selon l'une des revendications 1 à 9,
**caractérisé**
**en ce que** les convertisseurs à ultrasons (58, 59, 60, 61) comportent chacun au moins deux éléments convertisseurs électromécaniques (6, 7, 19, 20).

11. Système de mesure selon l'une des revendications 1 à 10,
**caractérisé**
**en ce que** la plaque de base (62) est conçue de telle sorte que les câbles (72) des convertisseurs à ultrasons (58, 59, 60, 61) sont recouverts sur ou dans la plaque de base, ou posés de manière à être protégés contre les influences extérieures.
